# FASCICULE DE BREVET EUROPEEN

(11) **EP 2 412 045 B1**
(45) Date de publication et mention de la délivrance du brevet: **21.05.2014**
(21) Numéro de dépôt: 10709852.7
(22) Date de dépôt: 24.03.2010
(51) Int. Cl.: H01M 2/26, H01M 2/02, H01M 10/0525, H01M 10/04, H01M 4/485, H01M 4/58

(54) **BATTERIE BIPOLAIRE A FONCTIONNEMENT AMELIORE**
BIPOLARE BATTERIE MIT VERBESSERTER FUNKTIONSWEISE
BIPOLAR BATTERY WITH IMPROVED OPERATION

(30) Priorité: 26.03.2009 FR 0901422
(43) Date de publication de la demande: 01.02.2012
(73) Titulaire: Commissariat à l'Énergie Atomique et aux Énergies Alternatives, 75015 Paris (FR)
(72) Inventeur: MAILLEY, Sophie, F-38730 Le Pin (FR); TIQUET, Pascal, F-38100 Grenoble (FR)
(74) Mandataire: Ilgart, Jean-Christophe
(86) Numéro de dépôt international: PCT/EP2010/053838
(87) Numéro de publication internationale: WO 2010/108956

(56) Documents cités:
- WO-A2-96/19015
- DE-A1-102007 001 574
- JP-A- 2000 030 746
- US-A- 5 518 836
- US-A- 5 861 221

## Description

### DOMAINE TECHNIQUE ET ART ANTÉRIEUR

La présente invention se rapporte à une batterie bipolaire offrant un fonctionnement amélioré.

Les batteries, comme par exemple les accumulateurs au lithium, fonctionnent sur le principe d'insertion et de désinsertion (ou intercalation-désintercalation) de lithium sur au moins une électrode.

Il existe plusieurs types d'architectures pour ces batteries.

L'un des types d'architecture est l'architecture monopolaire. Un matériau d'électrode positive est déposé sur un premier collecteur, un matériau d'électrode négative est déposé sur un deuxième collecteur. Les deux collecteurs sont superposés de sorte que les électrodes positive et négative soient en vis-à-vis, un séparateur polymère ou céramique ou composite est intercalé entre les deux électrodes. Pour augmenter la surface d'électrode et la capacité de l'élément, le collecteur peut-être enduit sur les deux faces.

Cet empilement peut être roulé de sorte à avoir une géométrie cylindrique comme cela est décrit dans le document US 2006/0121348.

On peut prévoir de superposer plusieurs de ces empilements, comme cela est décrit dans le document US2008/0060189. Les empilements sont connectés en parallèle.

Ce type d'architecture offre une grande surface active de matériau et donc une forte densité de courant générée. Cependant la différence de potentiel aux bornes de ces architectures est limitée à celle entre les deux matériaux d'électrodes.

Afin d'augmenter la tension aux bornes des batteries, une autre architecture a été proposée. Celle-ci consiste à réaliser des collecteurs bipolaires portant sur une face une électrode positive et sur une autre face une électrode négative, les collecteurs ainsi réalisés sont superposés, des séparateurs sont disposés entre les électrodes. L'empilement forme alors une pluralité de cellules électrochimiques connectées en série. La tension aux bornes de la batterie est égale à la somme des tensions aux bornes de chacune des cellules. Par conséquent, cette architecture permet d'offrir une batterie bipolaire avec une tension à ses bornes élevée. Ce type d'architecture est décrit par exemple dans le document WO 2006/061696.

Cependant, afin d'assurer un bon fonctionnement de chacune des cellules, il faut s'assurer d'un bon contact de l'électrolyte avec les électrodes positive, négative et le séparateur, ce contact définissant la surface active. De plus, il faut assurer l'étanchéité de chacune des cellules. Pour cela, on applique un effort de compression sur l'empilement. Cet effort de compression est appliqué sur les collecteurs en extrémités de l'empilement. Cependant, cet effort n'est jamais constant dans le temps puisqu'il est fonction du fluage des joints d'étanchéité. De plus, l'application d'un effort homogène sur chacune des cellules de l'empilement est complexe à obtenir. Il existe un risque d'avoir un fonctionnement hétérogène des différentes cellules. En effet, chacune des cellules génère une contre-pression sur les compartiments adjacents. Certaines cellules peuvent alors atteindre les limites de potentiel plus ou moins rapidement, la batterie est alors chargée de manière incomplète.

De plus cette structure en empilement ne permet pas toujours une intégration adéquate suivant l'application.

Le document WO96/19015 décrit un système pour pile à combustible comportant un empilement d'éléments bipolaires, chaque élément comprenant un élément supporte sur lequel sont formées une partie anode et une partie cathode, la partie anode d'un élément coopérant avec la partie cathode de l'élément adjacent, les éléments supports d'électrodes étant rigides.

C'est par conséquent un but de la présente invention d'offrir une batterie bipolaire offrant une tension élevée à ses bornes et un fonctionnent homogène de ses différentes cellules, et plus généralement d'offrir une batterie dont le fonctionnement est amélioré et présentant une plus grande fiabilité.

### EXPOSÉ DE L'INVENTION

Le but précédemment énoncé est atteint par une structure formée par la juxtaposition de compartiments unitaires connectés en série, la structure étant obtenue par la mise en oeuvre d'éléments formés chacun d'une électrode négative et d'une électrode positive portées par un collecteur électronique, les électrodes positive et négative d'un même collecteur étant décalées de sorte que, lors de la réalisation des compartiments unitaires par assemblage des éléments, les compartiments unitaires adjacents ne soient pas empilés. Ainsi un effort de pression peut alors être appliqué sur les électrodes de chacun des compartiments, indépendamment des autres cellules, et chaque compartiment ne subit pas les efforts de contre-pression appliqués par les compartiments voisins. Il est alors possible d'avoir un comportement sensiblement équilibré de tous les compartiments. De plus la réalisation des étanchéités est simplifiée. De plus, on utilise des collecteurs présentant une certaine souplesse, ce qui permet d'orienter avec une grande liberté les cellules les unes par rapport aux autres. Grâce à l'invention, il est possible de réaliser des batteries dont la forme peut être adaptée à l'application. En effet,

En d'autres termes, on développe la structure de la batterie de sorte que la contrepression exercée par une cellule ne s'applique pas sur la cellule voisine. Les compartiments unitaires sont juxtaposés au lieu d'être réalisés par empilement.

La présente invention a alors principalement pour objet un élément pour batterie bipolaire selon la revendication 1.

Dans un mode avantageux, les faces, sur lesquelles le matériau d'électrode positive et le matériau d'électrode négative sont disposés, sont opposées par rapport à la surface générale formée par les supports.

Le premier support et le deuxième support sont avantageusement disposés dans deux plans parallèles.

Le premier support, le deuxième support et la connexion sont réalisés d'un seul tenant à partir d'une plaque, la plaque étant de faible épaisseur de sorte à permettre une mise en forme aisée.

Le premier support et le deuxième support sont par exemple réalisés en nickel, en cuivre, en aluminium ou alliage d'aluminium.

L'élément pour batterie bipolaire selon la présente invention peut être formé par un tissu de carbone étanche sur lequel un film métallique, par exemple du nickel, du cuivre ou d'aluminium, est déposé sur l'une des faces du tissu.

Le matériau d'électrode positive est par exemple du LiFeP04 mélangé à un liant polymère de type PVDF et le matériau d'électrode négative est du Li4Ti5O12 mélangé à un liant polymère de type PVDF.

L'élément pour batterie bipolaire selon la présente invention peut comporter au niveau de la connexion de canaux traversants, par exemple des vias lors d'une réalisation par injection.

La présente invention a également pour objet une batterie bipolaire comportant au moins un élément selon la présente invention, le matériau d'électrode positive porté par le premier support est disposé en regard d'un matériau d'électrode négative, le matériau d'électrode négative porté par le deuxième support étant disposé en regard d'un matériau d'électrode positive, les matériaux d'électrode en regard étant séparés par un isolateur contenant un électrolyte, formant ainsi deux compartiments unitaires juxtaposés.

La batterie bipolaire peut comporter au moins un premier et un deuxième éléments selon la présente invention, le matériau d'électrode positive du premier élément étant disposé en regard d'un matériau d'électrode négative du deuxième élément, le matériau d'électrode négative du premier élément étant disposé en regard d'un matériau d'électrode positive et le matériau d'électrode positive du deuxième élément étant disposé en regard d'un matériau d'électrode négative, un isolateur contenant un électrolyte étant disposé entre les paires de matériaux d'électrode en regard, de sorte à former trois compartiments unitaires juxtaposés.

Un joint isolant électrique peut être interposé entre les supports en regard de sorte à réaliser l'étanchéité des compartiments unitaires et un film électriquement isolant recouvre les faces libres des supports, par exemple le joint isolant étant en élastomère, en latex ou en thermoplastique élastomère.

La batterie bipolaire selon la présente invention peut comporter une épaisseur de film supplémentaire au niveau des connexions électroniques entre le support d'un même élément.

La batterie bipolaire selon la présente invention peut également comporter des moyens aptes à appliquer un effort de compression à chaque compartiment unitaire de sorte à appliquer les uns contre les autres les matériaux d'électrode positive, négative et l'isolateur de chaque compartiment unitaire.

Ces moyens peuvent être formés par une enveloppe étanche à l'air dans laquelle les compartiments unitaires sont introduits, le vide étant réalisé dans l'enveloppe de sorte que des efforts de compression s'appliquent sur les compartiments unitaires.

L'étanchéité des compartiments unitaires peut être obtenue par injection d'un joint, par exemple en polymère thermoplastique et la compression de chacun des compartiments est obtenue par enrobage dans un matériau thermoplastique, par exemple par injection. Dans ces cas, on prévoit que les éléments comportent des canaux traversants, type via, au niveau de la connexion entre les supports.

Dans un exemple de réalisation, les compartiments unitaires sont disposés suivant une bande rectiligne. Par exemple, une partie de la bande est enroulée autour d'un axe conducteur et une autre partie de la bande est enroulée autour d'un autre axe conducteur, un film isolant électrique étant intercalé dans les enroulements, la tension aux bornes de la batterie étant la tension entre les deux axes conducteurs. Dans un autre exemple, les deux compartiments unitaires adjacents sont repliés l'un vers l'autre de sorte à être empilés, un film électriquement isolant étant disposés entre les compartiments unitaires adjacents.

On peut prévoir que des compartiments unitaires adjacents soient orientés suivant des directions différentes.

On peut aussi prévoir que les compartiments unitaires sont orientés de sorte à former une structure en trois dimensions.

La batterie selon la présente invention peut comporter, connectés en parallèle, au moins deux assemblages de compartiments unitaires connectés en série.

### BRÈVE DESCRIPTION DES DESSINS

La présente invention sera mieux comprise à l'aide de la description qui va suivre et des dessins en annexe sur lesquels :
- la figure 1 est une représentation schématique d'un exemple de réalisation d'une batterie bipolaire selon la présente invention,
- la figure 2A est une représentation d'un élément unitaire de la batterie de la figure 1,
- la figure 2B est une variante de réalisation de l'élément de la figure 2A,
- la figure 2C est une vue de dessus d'un détail de la figure 2B,
- la figure 2D est une variante de la réalisation de l'élément de la figure 2A où les électrodes positives et négatives sont réalisées sur la même face de collecteur,
- la figure 3A est une représentation schématique d'un autre exemple de réalisation d'une batterie bipolaire selon la présente invention faisant intervenir des éléments unitaires répartis sur deux faces du collecteur électronique,
- la figure 3B est une représentation schématique d'un autre exemple de réalisation d'une batterie bipolaire faisant intervenir des éléments unitaires répartis sur une face de conducteur électronique,
- la figure 4 est une représentation de la batterie de la figure 3A munie de moyens pour appliquer une pression sur chacune des cellules,
- la figure 5 est une représentation de la batterie de la figure 3 réalisée avec un premier type d'étanchéité,
- la figure 6 est une représentation de la batterie de la figure 3 réalisée avec un deuxième type d'étanchéité,
- les figures 7A, 7B, 8A, 8B, 9A, 9B, 10A, 10B, 11A à 11D et 12 sont des représentations schématiques de différentes configurations que peuvent prendre une batterie selon la présente invention.

### EXPOSÉ DÉTAILLÉ DE MODES DE RÉALISATION PARTICULIERS

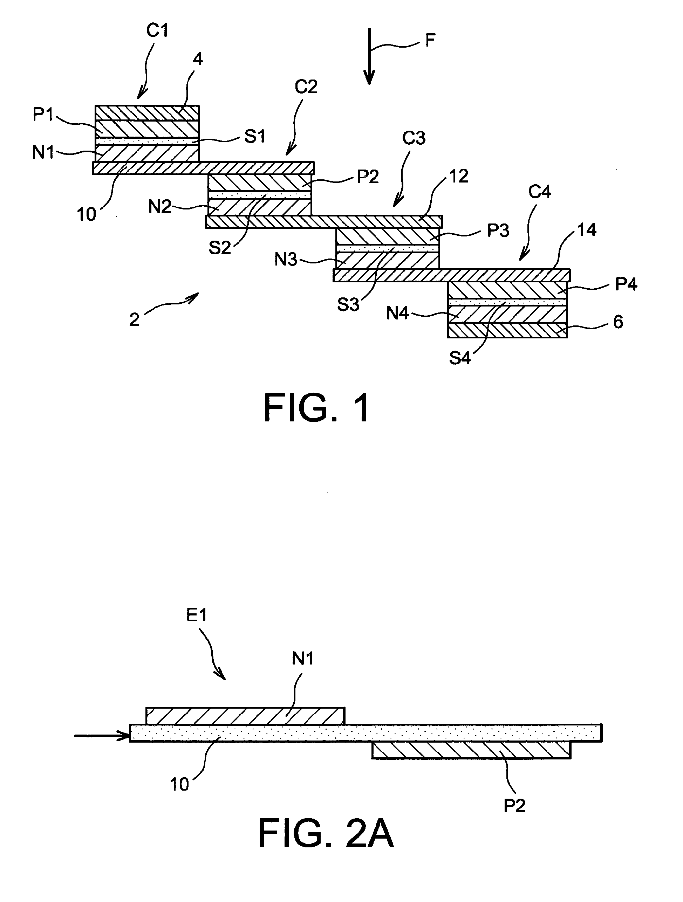

Sur la figue 1, on peut voir un premier exemple de réalisation d'une batterie bipolaire selon la présente invention et sur la figure 2A un élément isolé de cette batterie.

Dans la présente demande, nous désignerons par électrode bipolaire un support conducteur électronique comportant deux faces, l'une des faces étant munie d'une couche active positive et l'autre face étant munie d'une couche active négative de sorte à former respectivement une électrode positive et une électrode négative.

Nous désignerons également par « compartiment unitaire » l'ensemble formé par une électrode positive supportée par un collecteur de courant, un séparateur électrolytique, une électrode négative supportée par un autre collecteur de courant.

Les mêmes références seront utilisées dans toute la description pour désigner les éléments ayant une structure et une fonction similaire.

Sur la figure 1, la batterie 2 est formée de quatre compartiments unitaires C1 à C4 connectés en série.

Nous désignerons les électrodes positives par P et les électrodes négatives par N suivi d'un indice en fonction du compartiment auquel elles appartiennent. Les séparateurs seront désignés par S.

Le compartiment unitaire C1 comporte une électrode positive P1, une électrode négative N1, un séparateur S1, interposé entre les électrodes P1 et N1.

Le compartiment unitaire C2 comporte une électrode positive P2, une électrode négative N2, un séparateur S2, interposé entre les électrodes P2 et N2.

Le compartiment unitaire C3 comporte une électrode positive P3, une électrode négative N3, un séparateur S3, interposé entre les électrodes P3 et N3.

Le compartiment unitaire C4 comporte une électrode positive P4, une électrode négative N4, un séparateur S4, interposé entre les électrodes P4 et N4.

L'électrode positive P1 est déposée sur un collecteur de courant monopolaire 4 destiné à être relié à une borne d'un appareil (non représenté) que la batterie alimente. L'électrode négative N4 est déposée sur un collecteur de courant monopolaire 6 destiné à être relié à l'autre borne de l'appareil que la batterie alimente.

L'électrode négative N1 du compartiment C1 et l'électrode positive P2 du compartiment C2 sont supportées chacune sur une face d'un conducteur électronique 10.

L'électrode négative N2 du compartiment C2 et l'électrode positive P3 du compartiment C3 sont supportées chacune sur une face d'un conducteur électronique 12.

L'électrode négative N3 du compartiment C3 et l'électrode positive P4 du compartiment C4 sont supportées chacune sur une face d'un conducteur électronique 14.

Selon la présente invention, les électrodes positives P2, P3, P4 et les électrodes négatives N1, N2, N3 respectivement sont disposées sur les conducteurs électroniques 10, 12, 14 de manière décalée de sorte qu'elles ne soient pas disposées l'une au dessus de l'autre, i.e. en regardant selon la flèche F, l'électrode positive d'un compartiment et l'électrode négative du compartiment voisin portées par le même conducteur électronique ne se recouvrent pas.

Il en résulte que deux compartiments unitaires voisins ne sont pas empilés mais sont juxtaposés. Dans l'exemple représenté, la batterie a la forme d'un escalier.

Sur la figure 2A, on peut voir une électrode bipolaire E1 formée par le conducteur électronique 10 et les électrodes N1 et P2.

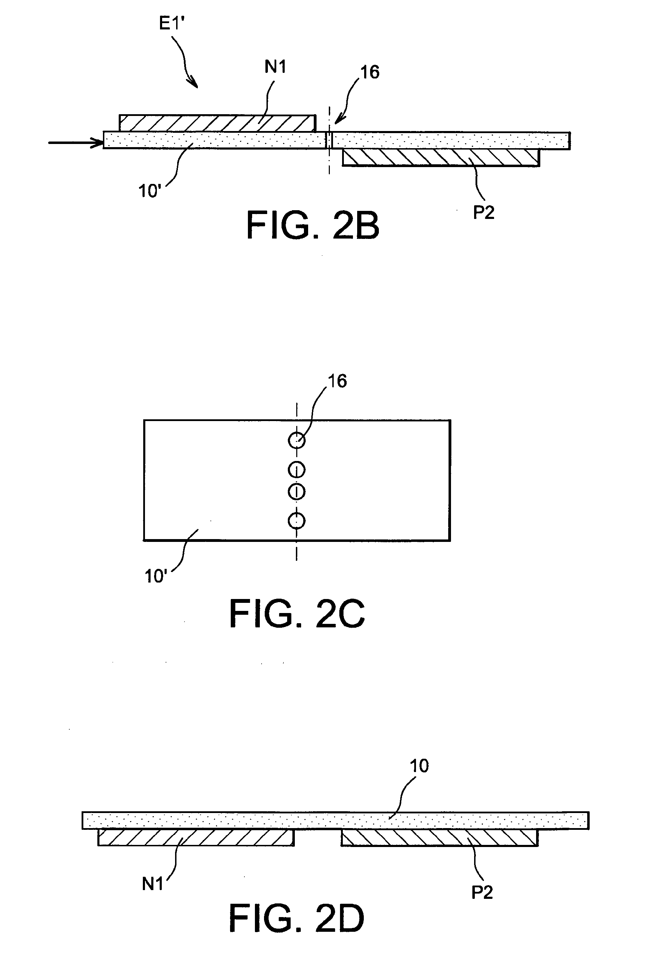

Sur les figures 2B et 2C, on peut voir une variante d'électrode bipolaire E1', celle-ci se distingue par le fait que le conducteur électronique 10' comporte des canaux 16 reliant les deux faces dans une zone située entre les deux électrodes N1, P2 afin de faciliter une réalisation de l'architecture de la batterie par injection de matériau thermoplastique, comme nous le verrons dans la suite de la description. Les canaux sont de type via.

Sur la figure 2D, les électrodes N1 et P2 sont sur la même face de conducteur électronique.

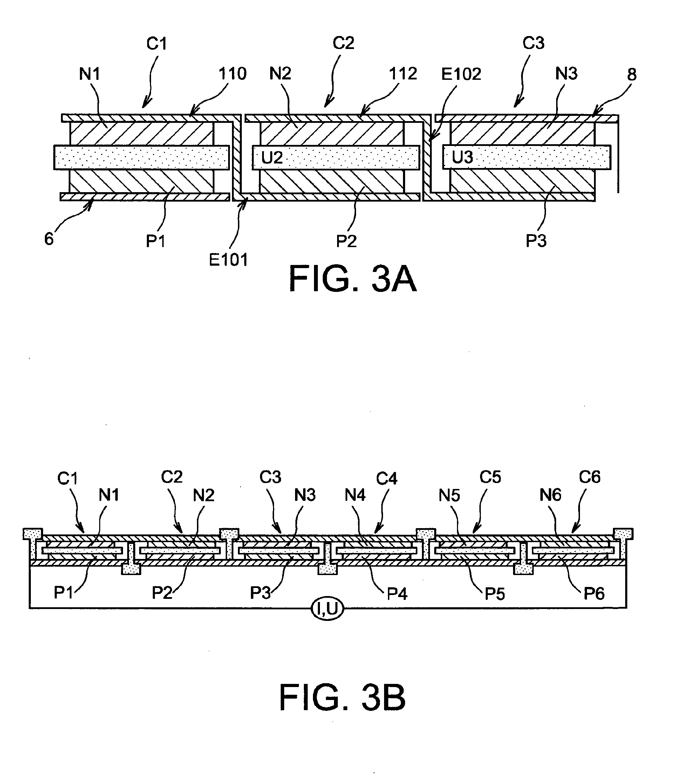

Sur la figure 3A, on peut voir un autre exemple de réalisation d'une batterie selon la présente invention, offrant l'avantage de présenter une structure sensiblement plane.

Pour cela, les conducteurs électroniques 110, 112 ont été conformés de sorte à former une marche. Chaque conducteur électronique comporte une première zone disposée dans un premier plan, une deuxième zone disposée dans un deuxième plan sensiblement parallèle au premier plan et une troisième zone connectant la première et la deuxième zone.

Chaque électrode bipolaire E101, E102 comporte une électrode N1 sur la première zone et une électrode P2 sur la deuxième zone.

Les électrodes bipolaires E101, E102 s'emboitent l'une dans l'autre.

Le décalage entre la face recevant le matériau d'électrode positive et celle recevant le matériau d'électrode négative est tel qu'il permet de réaliser une structure plane. La hauteur du décalage entre les deux faces du conducteur portant les matériaux d'électrode correspond sensiblement à l'épaisseur de l'empilement d'un matériau d'électrode positive, d'un matériau d'électrode négative et du séparateur. A titre d'exemple, on peut choisir une plaque bipolaire formant conducteur électronique ayant une épaisseur comprise entre 20 à 250 µm, un séparateur ayant une épaisseur comprise entre 20 µm à 150 µm, et des électrodes ayant une épaisseur comprise entre 30 µm à 300 µm, plus particulièrement 80 µm à 150 µm, et un décalage présentant une hauteur comprise entre 80 µm et 750 µm. si on considère la hauteur de la marche formée par le conducteur, on tient compte de l'épaisseur de u conducteur, celle-ci est par exemple comprise entre 01 mm et 1 mm.

La flexibilité de la jonction bipolaire étanche inter compartiment peut être obtenue en utilisant un conducteur électronique de faible épaisseur, par exemple comprise entre 20 et 250 µm, de préférence entre 20 µm et 100 µm, de préférence métallique.

Avantageusement les conducteurs électroniques sont réalisés d une seule pièce et mis en forme par pliage ou emboutissage.

Les conducteurs électroniques 10, 12, 14 et 110, 114 peuvent être réalisés par exemple en nickel, en cuivre, en aluminium, en alliage d'aluminium, le choix du matériau étant effectué suivant la compatibilité avec les matériaux constitutifs des électrodes N et P. On peut également envisager d'utiliser un composite de carbone formé à partir d'un tissu de carbone étanche sur lequel, afin d'assurer la compatibilité électrochimique et chimique avec le matériau d'électrode, un film métallique (de Nickel, Cuivre, Aluminium) est déposé sur l'une des faces par un procédé de dépôt sous vide, de type CVD ou PVD, ou électrodéposition ou dépôt électroless afin d'assurer la conduction électronique.

La figure 3B présente le cas où l'on utilise la configuration des conducteurs de la figure 2D. Il n'est pas nécessaire de plier le conducteur entre les deux compartiments. Cette approche permet ainsi d'utiliser des conducteurs électroniques de plus grosse épaisseur et moins flexibles.

Grâce à l'invention, la pression appliquée à chacun des compartiments unitaires afin d'assurer un bon contact entre les différents éléments le composant, est contrôlable de façon indépendante, sans avoir un effet de contre pression sur le compartiment voisin.

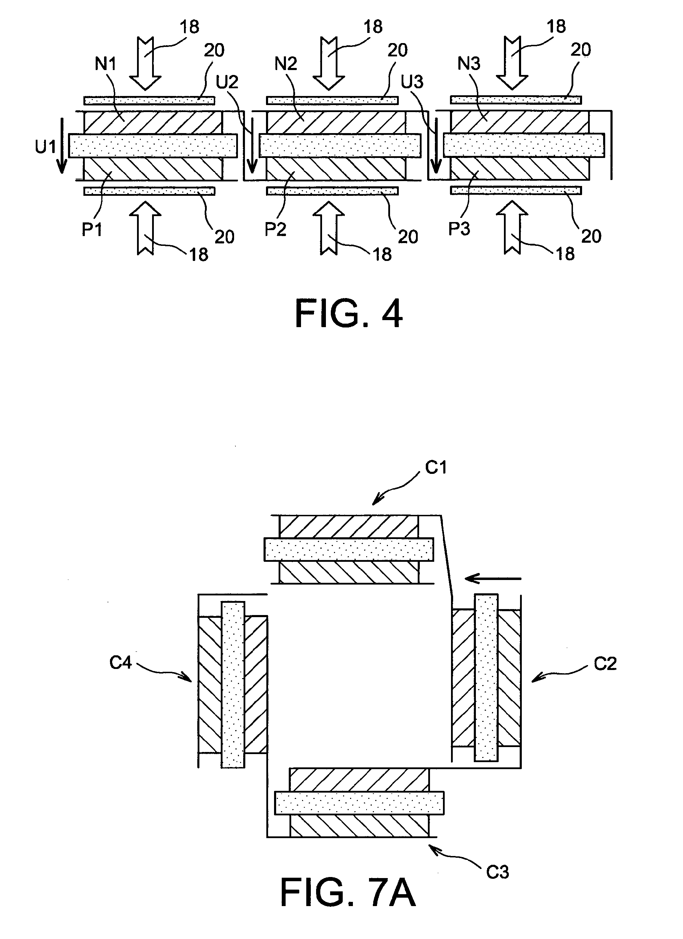

Sur la figure 4, on peut voir schématiquement représentés des moyens pour appliquer un effort de compression symbolisé par la flèche 18 à chacun de compartiments unitaires de la batterie de la figure 1. Par exemple, la compression sur chacun des compartiments est assurée par un boitier ou des plaques de serrages 20 disposés du côté des faces extérieures des électrodes.

De manière particulièrement avantageuse, l'assemblage est mis dans un sachet souple étanche constitué par un ensemble laminé formé d'au moins une couche polymère extérieure en polyester ou nylon, un film métallique (aluminium) destiné à limiter les microtrous du film polymère et une deuxième couche polymère de type polyoléfine. Cet ensemble laminé est couramment utilisé comme sachet souple pour les batteries, assurant ainsi une étanchéité au gaz et permettant l'étape de thermo-scellage. Grâce à la mise en oeuvre de tels sachets souples étanches, il est possible de réaliser le vide dans le sachet, ce qui assurera l'application d'une pression suffisante sur le compartiment pour ne pas requérir un système de compression supplémentaire. Cette mise sous vide permet de s'affranchir des plaques de compression.

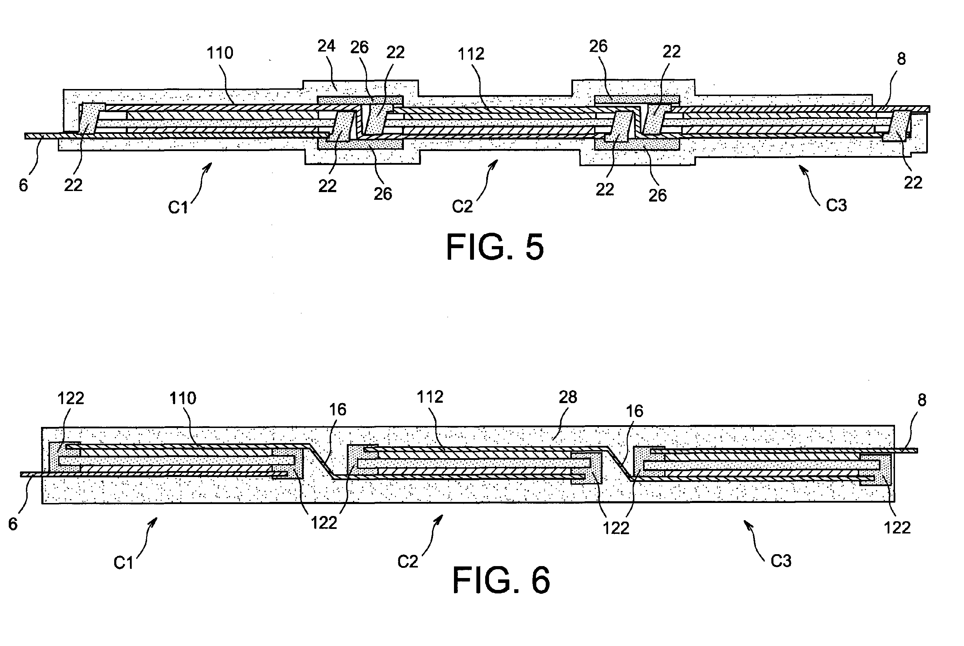

Sur la figure 5, on peut voir un premier exemple de réalisation des étanchéités entre compartiments et vis-à-vis de l'environnement extérieur pour une batterie dans la configuration de la figure 3.

Dans ce premier exemple de réalisation, chaque compartiment unitaire comporte, sur ses bords latéraux, un joint d'étanchéité 22 pour confiner l'électrolyte à l'intérieur des compartiments dans les séparateurs S1, S2, S3. De plus ce joint 22 permet d'éviter une mise en court-circuit des conducteurs électroniques.

Dans le cas des compartiments unitaires C1 et C3, le joint 22 s'étend entre le collecteur de courant 6, 8 et le conducteur électronique 110, 112 respectivement sur tout le pourtour des compartiments C1 et C3.

Dans le cas des compartiments unitaire C2, le joint 22 s'étend entre le conducteur électronique 110 et le conducteur électronique 112, sur tout le pourtour du compartiment C2.

Le joint 22 est par exemple un élastomère de la famille des éthylène-propylène comme l'EPDM, ou de la famille des styrène-butadiène comme les latex ou de la famille des silicones ou encore celle des thermoplastiques élastomères (TPE), du type styreniques comme le SBS® ou le Kapton®.

La batterie comporte également un film 24 isolant électrique recouvrant l'ensemble des compartiments unitaires mis en série. Seules les bornes de connexion de la batterie traversent l'enveloppe 24.

Le film 24 peut être du type film adhésif se fixant sur la face extérieure de chacun des conducteurs électronique. La présence de ce film permet d'éviter une mise en court-circuit des compartiments entre eux, en particulier dans le cas de configurations repliées des compartiments comme nous le verrons par la suite.

De plus, on prévoit avantageusement de déposer spécifiquement au niveau des connexions entre compartiments unitaires une couche isolante électrique 26 supplémentaire, de préférence adhésive. Cette couche 26 permet une étanchéité plus robuste au niveau des connexions qui pourront être déformées comme nous le verrons par la suite.

Sur la figure 6, on peut voir un autre exemple de réalisation de l'étanchéité et de l'isolation électrique de la batterie de la figure 3.

Dans cet autre exemple de réalisation, on met en oeuvre une technique d'injection. Les joints 122 réalisés par injection plastique assurent à la fois l'étanchéité de chaque compartiment et la compression sur les conducteurs électronique

Le matériau injecté peut être un film polymère thermoplastique isolant (copolymères block Ethylène-propylène et Ethylène norbornene).

On prévoit ensuite d'enrober l'ensemble de la batterie par un matériau thermoplastique ou un nanomatériau 28 injecté, par exemple de type PP, PEHD, COC, PMMA, PC PEEK, PPS pouvant contenir des charges comme des fibres de verre, de carbone ou des nano charges comme des nanotubes de carbone, nanoargile, etc. Pour cela les conducteurs électroniques comportent des canaux traversants dans la zone de connexion, comme ceux décrits en relation avec la figure 2C.

Les vias 16 décrits précédemment dans le conducteurs électroniques 110, 112 permettent le passage du matériau injecté. Cet exemple de réalisation permet de réaliser une batterie offrant une forme fixe et cet enrobement la protège des chocs extérieurs.

Les vias présentent par exemple un diamètre compris entre 0,5 mm et 5 mm, et de manière préférentielle entre 1 mm et 2 mm et sont espacés de 1 mm à 2 mm.

Cet exemple de réalisation présente l'avantage de ne pas nécessiter de dispositif de compression additionnelle et d'offrir une forme définitive à la batterie. Comme nous le verrons par la suite, la présente invention permet de conformer la batterie selon un grand nombre de configurations, ces configurations pouvant être fixées par l'enrobage. On donne à la batterie la forme souhaitée, puis lors de l'enrobage cette forme est figée. Il est envisageable de combiner les deux exemples de réalisation, par exemple en faisant un joint selon le premier exemple et en enrobant la batterie par injection. Une zone de via est à prévoir pour permettre l'injection correcte du polymère.

La présente invention présente une grande flexibilité au niveau des connexions entre les compartiments unitaires. Il est alors possible d'orienter les compartiments les uns par rapport aux autres avec une grande liberté. La forme ainsi obtenue est ensuite figée lors de l'enrobage.

Nous allons maintenant donner un exemple de réalisation d'une électrode bipolaire selon la présente invention.

Un matériau d'électrode positive de type LiFeP04 mélangé à un liant polymère de type PVDF est déposé sur un conducteur en aluminium, le matériau d'électrode peut être enduit, peint, sérigraphié ou déposé sous la forme d'un spray.

Un matériau d'électrode négative de type Li4Ti5O12 mélangé à un liant polymère de type PVDF est ensuite déposé sur la face opposée du conducteur de manière décalée par rapport à l'électrode positive, par exemple celui-ci est enduit, peint, sérigraphié ou déposé sous la forme d'un spray.

On peut prévoir de réaliser préalablement au dépôt des électrodes des masques pour délimiter les surfaces d'électrodes.

En l'absence de masque, on peut prévoir une étape de retrait des matériaux d'électrode superflus par grattage du matériau d'électrode superflu.

Les électrodes peuvent également être réalisées par un dépôt par enduction slot die sur les deux faces du conducteur électronique, ce qui permet d'obtenir directement l'électrode bipolaire avec les deux faces d'électrodes décalées l'une par rapport à l'autre. Le procédé slot die est un procédé d'enduction permettant un contrôle suivant la direction orthogonale à la surface de la position de la tête d'injection de l'encre conduisant à définir des zones de dépôts et des zones d'absence de dépôt (la tête d'enduction n'étant pas en contact avec le substrat dans cette étape).

Nous allons maintenant décrire différents exemples de configuration qui peuvent être obtenus grâce à la présente invention.

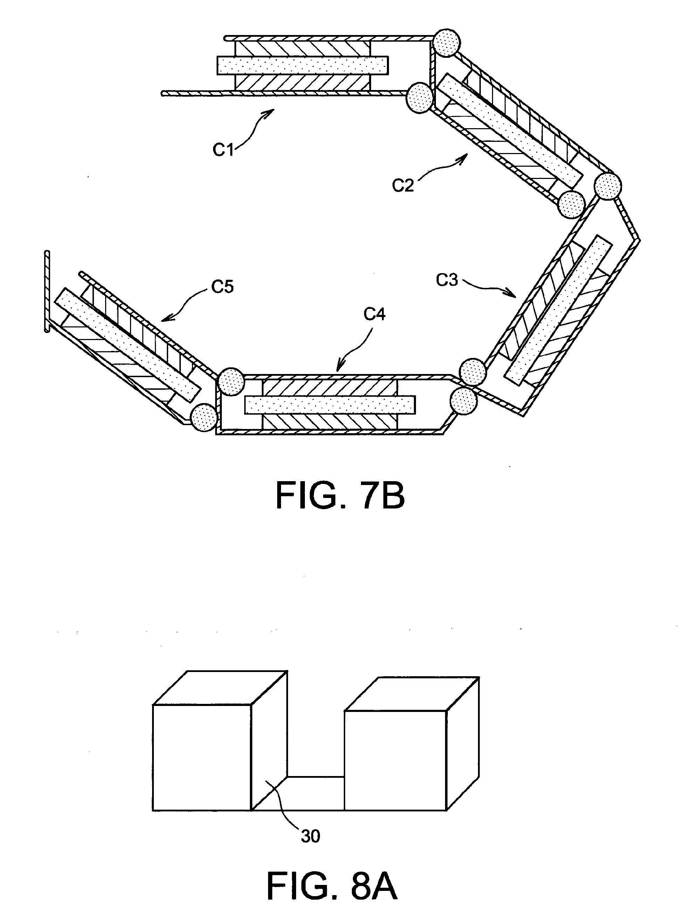

Sur les figures 7A et 7B, on peut voir la batterie selon la présente invention sous la forme d'un enroulement. Sur la figure 7A, la batterie comporte quatre compartiments C1 à C4 disposés chacun à angle droit par rapport au compartiment adjacent.

Sur la figure 7B, la batterie comporte cinq compartiments unitaires C101 à C105 présentant des orientations relatives différentes.

Sur la figure 8A, on peut voir une disposition d'un assemblage de compartiments unitaires formant des cubes ouverts sur une face. Les cubes étant associés entre eux par un compartiment bipolaire suivant l'invention.

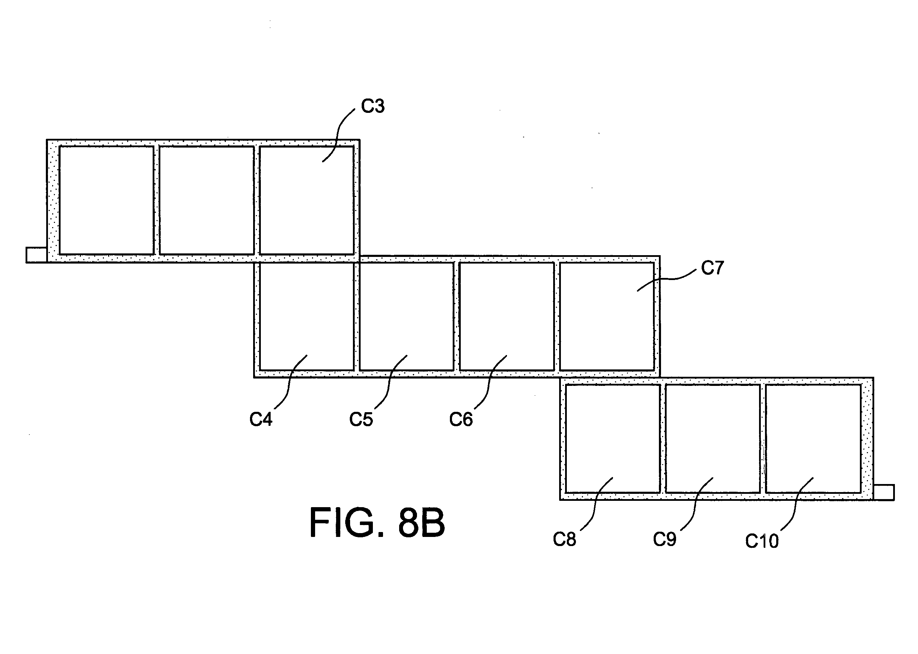

La figure 8B montre la forme développée des compartiments unitaires dont la disposition relative des conducteurs permet de réalisation la structure en trois dimensions de la figure 8A. Cette batterie comporte 10 compartiments unitaires et on remarque que les compartiments C3 et C4 présentent une orientation différente de celle de compartiments C1 à C3. Cette orientation différente est obtenue en disposant le conducteur électronique commun aux compartiments C3 et C4 orthogonalement par rapport au conducteur électronique commun aux compartiments C2 et C3.

Grâce à l'invention, on peut donc orienter les conducteurs électroniques de sorte à former des formes géométriques avec arêtes. Les conducteurs ne sont donc pas nécessairement alignés. Par conséquent, on peut réaliser des formes en trois dimensions. De plus, du fait de l'enrobage ou de l'enveloppement avec un matériau isolant électrique, on peut prévoir qu'un compartiment unitaire entre en contact avec un ou plusieurs autres compartiments unitaires.

La réalisation de telles formes permet de faciliter l'intégration des batteries dans des éléments d'outillage ou sur des petits véhicules tels qu'un vélo à assistance électrique, par exemple au niveau du moteur sur le moyeu de roue, ou à l'intérieur d'un carter moteur.

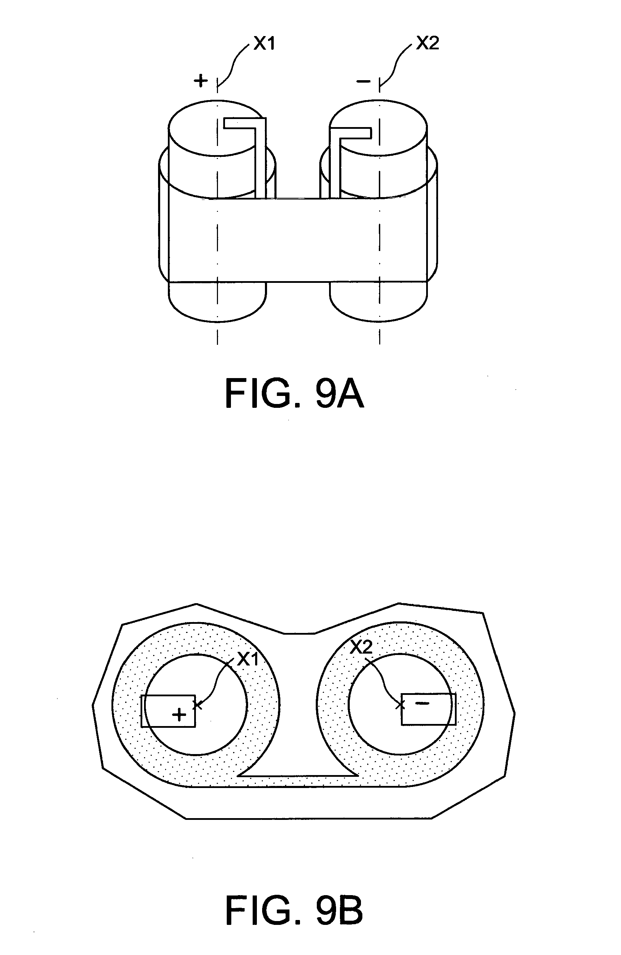

Par tailleurs, chaque compartiment unitaire présente une certaine flexibilité, notamment du fait qu'il ne met en oeuvre qu'un seul compartiment électrolytique, il est alors envisageable de réaliser un enroulement, comme on peut le voir sur les figures 9A et 9B. On peut alors se rapprocher de la forme actuelle des piles.

Sur les figures 9A et 9B, on peut voir deux cylindres bobinés enrobés dans un matériau plastique.

On réalise des électrodes bipolaires comme décrit précédemment. On réalise ensuite un assemblage de compartiments unitaires de sorte à former une bande. La bande est ensuite enroulée autour de deux axes conducteurs X1, X2 tels que représentés sur les figures 9A et 9B en intercalant un film flexible isolant électrique. Ce film est par exemple un polymère flexible isolant électrique tel que du PTFE, PVDF, siliconepolyimide, polyuréthane, parylène ou le PET. La différence de potentiel aux bornes de la batterie ainsi réalisée est celle entre les deux axes conducteurs. La forme de l'ensemble peut être figée par injection dans un polymère décrit ci-dessus.

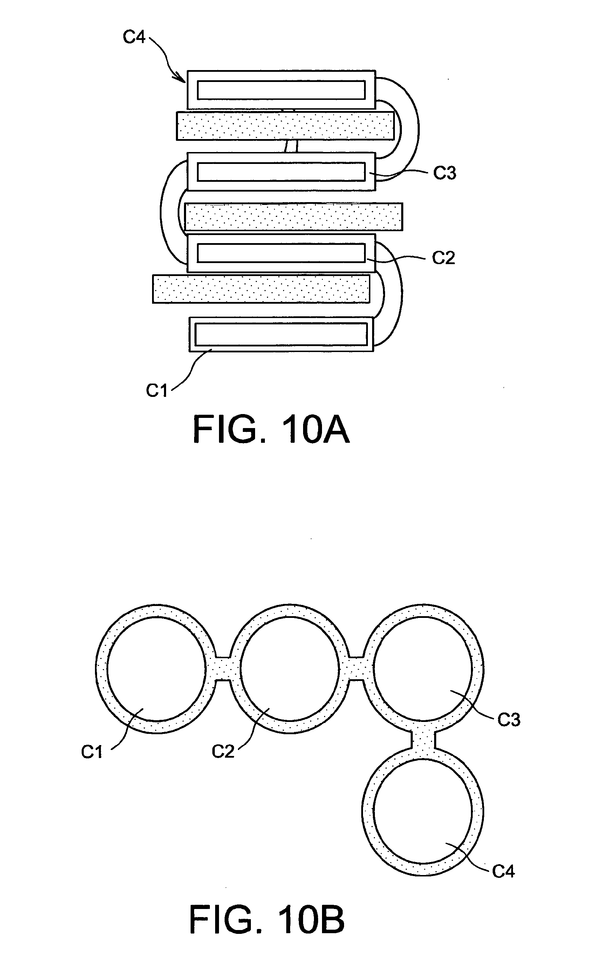

La flexibilité entre les compartiments unitaires peut être suffisante pour rabattre les compartiments les uns sur les autres de sorte à former un empilement en accordéon, comme représenté sur la figure 10A.

Cette configuration permet de se rapprocher des structures empilées de l'état de la technique tout en s'affranchissant des problèmes de pression/contre-pression entre les compartiments.

Sur la figure 10B, on peut voir un exemple de la forme développée des compartiments unitaires avant pliage.

On peut envisager de figer la forme en repliée par injection comme décrit précédemment. On prévoit alors avantageusement de disposer un feuillet isolant 32, comme par exemple un polymère isolant électrique tel que PTFE, PVDF, siliconepolyimide, polyuréthane, parylène, PET) entre chacun des compartiments bipolaires, afin d'éviter la mise en court-circuit des compartiments lors de l'injection et en vue de maintenir un contrôle de pression inter compartiment.

Dans la représentation de la figure 10B, les compartiments unitaires ont la forme de disque, cependant on peut envisager toute autre forme. Il peut s'agir d'un polyèdre à n côtés, n étant un entier positif.

Sur la figure 10B, les compartiments ont la forme de disque, par conséquent les conducteurs électroniques sont formés de deux disques raccordés par une zone de connexion 34 amincie formant languette. Dans ce cas, les dimensions de la languette sont choisies suffisamment grandes pour éviter l'échauffement local de la structure au niveau de la zone de connexion lors du passage de courant.

Il est également envisageable de connecter des jeux de compartiments unitaires en série ou en parallèle afin de réaliser des batteries offrant une intensité donnée ou une tension donnée.

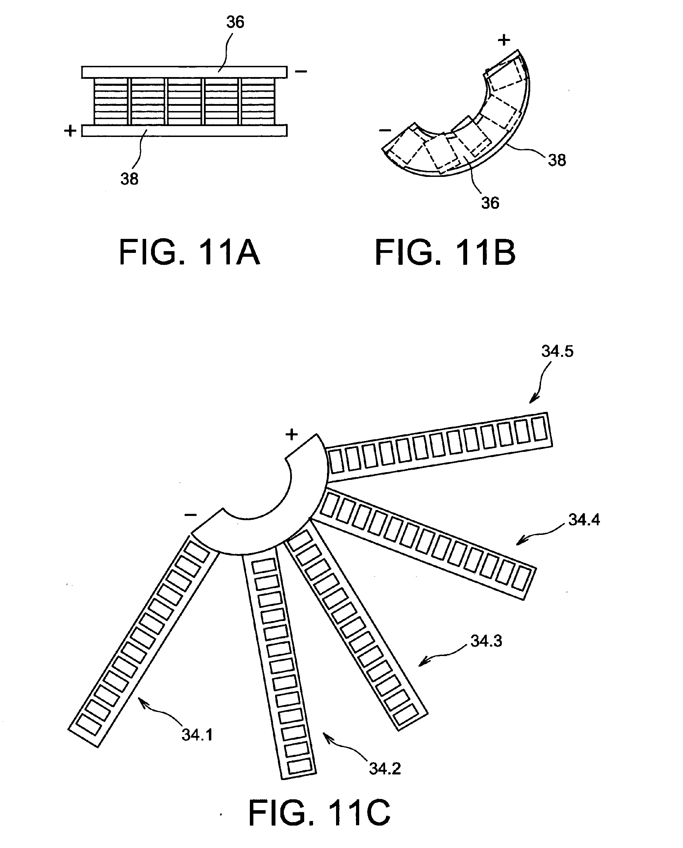

Sur les figures 11A et 11B, on peut voir un exemple de réalisation d'une batterie composée de cinq empilements 34.1, 34.2, 34.3, 34.4, 34.5 selon la présente invention connectés en parallèles par des collecteurs 36, 38.

Sur la figure 11C, on peut voir les empilements 34.1 à 34.5 déployés avant leur mise en forme en accordéon.

Les empilements 34.1 à 34.5 sont réalisés de manière similaire à celle décrite pour l'empilement de la figure 10A.

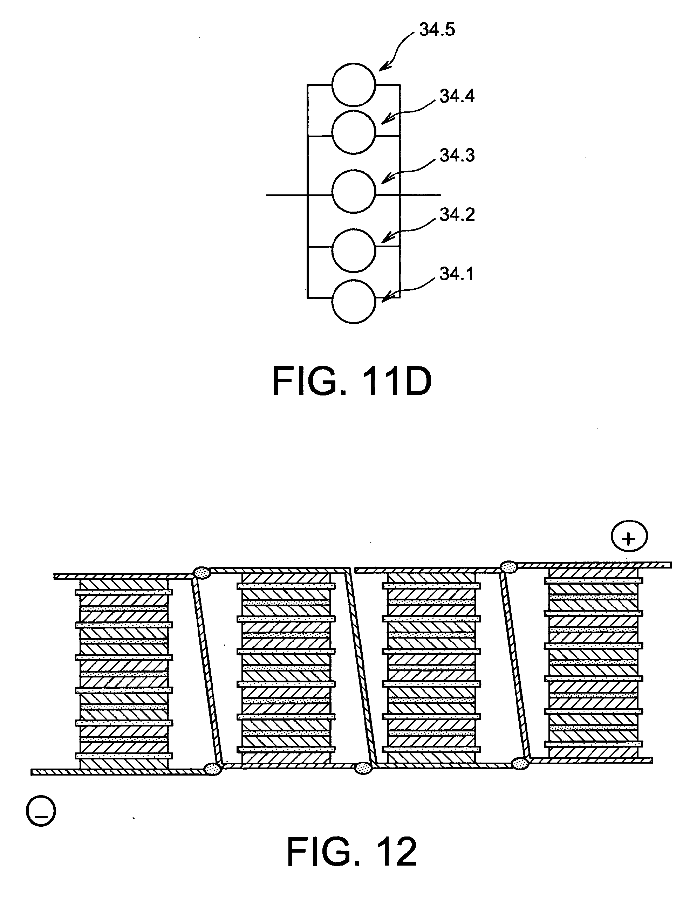

Sur la figure 11D, est schématisé le circuit électrique de cette batterie.

Sur la figure 12, on peut voir un autre exemple de réalisation de batterie selon la présente invention comportant à la fois des empilements de type monopolaire avec intercalation de séparateur comme décrit dans une architecture du document US2008/060189 connectés en série grâce à des conducteurs électroniques selon la présente invention.

Des jonctions isolantes 42 sont prévues entre chaque paire de conducteurs électroniques 40.1 à 40.3 adjacents.

Nous allons maintenant donner des exemples de batteries selon la présente invention offrant des caractéristiques électriques données.

Dans un exemple, on souhaite réaliser un bloc de batterie remplaçant une batterie Ni-Cd 9,6 V, 2Ah de type connue intégrée à une perceuse.

Pour la réalisation des électrodes bipolaires, on reprend l'exemple de procédé décrit précédemment en utilisant comme couple d'électrodes le couple LiFePO₄/Li₄Ti₅O₁₂ qui offre un potentiel de 1,9 V.

Pour obtenir une tension de 9,6 V, chaque assemblage comporte cinq compartiments unitaires offrant chacun une tension de 1,9 V à ses bornes. Pour cela, on réalise quatre électrodes bipolaires partagées entre les cinq compartiments unitaires, les extrémités de chaque empilement étant relié à des collecteurs monopolaires.

Les cinq assemblages sont connectés en parallèle offrant l'intensité souhaitée.

Chaque assemblage peut-être disposé dans une enveloppe isolante électrique thermoscellable tirée au vide dont seules les connexions positives et négatives traversent l'enveloppe afin d'assurer la connexion avec les collecteurs mettant en parallèle les cinq assemblages. Suivant la configuration souhaitée, on pourra orienter différemment les compartiments entre eux et les assemblages entre eux.

Dans un autre exemple, on souhaite réaliser une batterie assurant une sortie en tension de 24 V ou 36V et permettant une intégration dans un véhicule automobile.

Les matériaux d'électrode LiFePO₄/Li4Ti₅O₁₂ peuvent être intégrés à des assemblages bipolaires comme représenté sur la figure 11C.

Afin de répondre à un besoin de tension nominale de 24 V, on réalise des assemblages de 13 compartiments unitaires en série. Les assemblages sont ensuite connectés en parallèle.

Pour une tension nominale de 36 V, on réalise des assemblages de 19 compartiments unitaires en série. Les assemblages sont ensuite connectés en parallèle.

Les assemblages sont ensuite pliés en accordéon comme décrit ci-dessus.

Dans les exemples de réalisation décrits ci-dessus, l'électrode positive et l'électrode négative d'un élément sont disposées sur deux faces opposées. Mais il est bien entendu que l'on peut prévoir de les déposées sur la même face, ou sur deux faces orientées d'un même côté.

## Revendications

1. Elément pour batterie bipolaire, destiné à la réalisation de deux compartiments unitaires (C1, C2, C3, C4) comportant un support conducteur électronique comprenant une première partie de support conducteur électronique, une deuxième partie de support conducteur électronique, une connexion conductrice électronique connectant le première et la deuxième partie de support conducteur électronique, chaque partie de support conducteur électronique comportant une première et une deuxième face distincte des première et deuxième faces de l'autre partie de support conducteur électronique , ledit élément comportant également un matériau d'électrode positive (P1, P2) déposé sur l'une des faces de la première partie de support conducteur électronique et un matériau d'électrode négative (N1, N2) déposé sur l'une des faces de l'autre partie de support conducteur électronique, **caractérisé en ce que** la première partie de support conducteur électronique, la deuxième partie de support conducteur électronique et la connexion sont réalisées d'un seul tenant à partir d'une plaque, ladite plaque ayant un épaisseur comprise entre 20 µm et 250 µm permettant une mise en forme aisée et offrant une certaine souplesse, ce qui permet d'orienter avec une grande liberté les compartiments unitaires les uns par rapport aux autres.

2. Elément pour batterie bipolaire selon la revendication 1, dans lequel les faces, sur lesquelles le matériau d'électrode positive (P1, P2) et le matériau d'électrode négative (N1, N2) sont disposés, sont opposées par rapport à la surface générale formée par le support (10, 110, 12, 112).

3. Elément pour batterie bipolaire selon la revendication 1 ou 2, dans lequel la première partie de support conducteur électronique (10, 110) et la deuxième partie de support conducteur électronique (12, 112) sont disposées dans deux plans parallèles.

4. Elément pour batterie bipolaire selon la revendication 1 à 3, dans lequel la première partie de support conducteur électronique (110, 112) et la deuxième partie de support conducteur électronique (110, 112) sont réalisés en nickel, en cuivre, en aluminium ou alliage d'aluminium ou sont formés par un tissu de carbone étanche sur lequel un film métallique, par exemple du nickel, du cuivre ou d'aluminium, est déposé sur l'une des faces du tissu, et le matériau d'électrode positive (P1, P2) est le LiFePO4 mélangé à un liant polymère de type PVDF et le matériau d'électrode négative (N1, N2) est du Li4Ti5O12 mélangé à un liant polymère de type PVDF

5. Batterie bipolaire comportant au moins un élément selon l'une des revendications précédentes, le matériau d'électrode positive (P1) porté par la première partie de support conducteur électronique (10, 110) est disposé en regard d'un matériau d'électrode négative, le matériau d'électrode négative (N2) porté par la deuxième partie de support conducteur électronique (12) étant disposé en regard d'un matériau d'électrode positive, les matériaux d'électrode en regard étant séparés par un isolateur contenant un électrolyte, formant ainsi deux compartiments unitaires juxtaposés (C1, C2).

6. Batterie bipolaire selon la revendication 5, comportant au moins un premier et un deuxième éléments selon l'une des revendications 1 à 4, le matériau d'électrode positive (P1) du premier élément étant disposé en regard d'un matériau d'électrode négative (N2) du deuxième élément, le matériau d'électrode négative (N1) du premier élément étant disposé en regard d'un matériau d'électrode positive et le matériau d'électrode positive (P2) du deuxième élément étant disposé en regard d'un matériau d'électrode négative, un isolateur contenant un électrolyte étant disposé entre les paires de matériaux d'électrode en regard, de sorte à former trois compartiments unitaires juxtaposés (C1, C2, C3).

7. Batterie bipolaire selon la revendication 5 ou 6, dans laquelle un joint isolant électrique (22) est interposé entre les éléments en regard de sorte à réaliser l'étanchéité des compartiments unitaires (C1, C2, C3) et un film électriquement isolant (24) recouvre les faces libres des supports, par exemple le joint isolant étant en élastomère, en latex ou en thermoplastique élastomère.

8. Batterie bipolaire selon la revendication précédente, comportant une épaisseur de film supplémentaire (26) au niveau des connexions électroniques entre le support d'un même élément.

9. Batterie bipolaire selon la revendication précédente, comportant des moyens (20) aptes à appliquer un effort de compression à chaque compartiment unitaire de sorte à appliquer les uns contre les autres les matériaux d'électrode positive, négative et l'isolateur de chaque compartiment unitaire (C1, C2, C3).

10. Batterie bipolaire selon l'une des revendications 7 à 9, comportant une enveloppe étanche à l'air dans laquelle les compartiments unitaires sont introduits, le vide étant réalisé dans l'enveloppe de sorte que des efforts de compression s'appliquent sur les compartiments unitaires.

11. Batterie bipolaire selon la revendication 6 ou 7, dans laquelle l'étanchéité des compartiments unitaires est obtenue par injection d'un joint (122), par exemple en polymère thermoplastique et la compression de chacun des compartiments (C1, C2, C3) est obtenue par enrobage dans un matériau thermoplastique, par exemple par injection.

12. Batterie bipolaire selon la revendication 11, dans lequel les éléments comportant des canaux traversants (16), type via, au niveau de la connexion entre les supports.

13. Batterie bipolaire selon l'une des revendications 5 à 12, dans lequel les compartiments unitaires sont disposés suivant une bande rectiligne.

14. Batterie bipolaire selon la revendication 12, dans lequel une partie de la bande est enroulée autour d'un axe conducteur (X1) et un autre partie de la bande est enroulée autour d'un autre axe conducteur (X2), un film isolant électrique étant intercalé dans les enroulements, la tension aux bornes de la batterie étant la tension entre les deux axes conducteurs.

15. Batterie bipolaire selon la revendication 13, dans lequel deux compartiments unitaires adjacents sont repliés l'un vers l'autre de sorte à être empilés, un film électriquement isolant étant disposés entre les compartiments unitaires adjacents.

16. Batterie bipolaire selon l'une des revendications 5 à 12, dans laquelle des compartiments unitaires adjacents sont orientés suivant des directions différentes, par exemple de sorte à former une structure en trois dimensions.

17. Batterie bipolaire selon l'une des revendications 5 à 12, comportant connectés en parallèle, au moins deux assemblages de compartiments unitaires connectés en série.

## Patentansprüche

1. Element für eine bipolare Batterie, welches zur Umsetzung von zwei einheitlichen Fächern (C1, C2, C3, C4) vorgesehen ist, welche einen elektronisch leitenden Träger mit einem ersten elektronisch leitenden Trägerabschnitt, einem zweiten elektronisch leitenden Trägerabschnitt und einer den ersten und den zweiten elektronisch leitenden Trägerabschnitt verbindenden elektronisch leitenden Verbindung aufweist, wobei jeder elektronisch leitende Trägerabschnitt eine erste und eine zweite Fläche aufweist, welche von der ersten und zweiten Fläche des anderen elektronisch leitenden Trägerabschnitts getrennt sind, wobei das Element ebenfalls positives Elektrodenmaterial (P1, P2) aufweist, welches auf eine der Flächen des ersten elektronisch leitenden Trägerabschnitts aufgebracht ist, sowie negatives Elektrodenmaterial (N1, N2), welches auf eine der Flächen des anderen elektronisch leitenden Trägerabschnitts aufgebracht ist, **dadurch gekennzeichnet, dass** der erste elektronisch leitende Trägerabschnitt, der zweite elektronisch leitende Trägerabschnitt sowie die Verbindung in einem Stück aus einer Platte hergestellt sind, wobei die Platte eine Dicke zwischen 20 µm und 250 µm aufweist, wodurch eine leichtere Formgebung ermöglich wird und eine gewisse Biegsamkeit geboten wird, so dass eine Ausrichtung der einheitlichen Fächer zueinander mit großer Freiheit ermöglicht wird.

2. Element für eine bipolare Batterie nach Anspruch 1, in welchem die Flächen, auf denen das positive Elektrodenmaterial (P1, P2) und das negative Elektrodenmaterial (N1, N2) aufgebracht werden, einer von dem Träger (10, 110, 12, 112) gebildeten allgemeinen Oberfläche gegenüberliegend angeordnet sind.

3. Element für eine bipolare Batterie nach Anspruch 1 oder 2, in welchem der erste elektronisch leitende Trägerabschnitt (10, 110) und der zweite elektronisch leitende Trägerabschnitt (12, 112) in zwei parallelen Ebenen angeordnet sind.

4. Element für eine bipolare Batterie nach einem der Ansprüche 1 bis 3, in welchem der erste elektronisch leitende Trägerabschnitt (110, 112) und der zweite elektronisch leitende Trägerabschnitt (110, 112) aus Nickel, Kupfer, Aluminium oder einerAluminiumlegierung hergestellt sind, oder aus einem dichten Kohlenstoffgewebe gebildet sind, auf welchem ein metallischer Film, beispielsweise aus Nickel, aus Kupfer oder aus Aluminium, auf einer der Gewebeflächen aufgebracht ist, und das positive Elektrodenmaterial (P1, P2) LiFeP04 ist, welches mit einem polymeren Bindemittel vom Typ PVDF gemischt wird, und das negative Elektrodenmaterial (N1, N2) Li4Ti5O12 ist, welches mit einem polymeren Bindemittel vom Typ PVDF gemischt wird.

5. Bipolare Batterie, welche mindestens ein Element nach einem der vorhergehenden Ansprüche aufweist, wobei das positive Elektrodenmaterial (P1), welches von dem ersten elektronisch leitenden Trägerabschnitt (10, 110) getragen wird, gegenüber einem negativen Elektrodenmaterial angeordnet ist, wobei das negative Elektrodenmaterial (N2), welches von dem zweiten elektronisch leitenden Trägerabschnitt (12) getragen wird, gegenüber einem positiven Elektrodenmaterial angeordnet ist, wobei die gegenüberliegenden Elektrodenmaterialien durch einen einen Elektrolyten enthaltenden Isolator voneinander getrennt sind, so dass zwei nebeneinanderliegende einheitliche Fächer (C1, C2) gebildet werden.

6. Bipolare Batterie nach Anspruch 5, welche mindestens ein erstes und ein zweites Element nach einem derAnsprüche 1 bis 4 aufweist, wobei das positive Elektrodenmaterial (P1) des ersten Elements gegenüber einem negativen Elektrodenmaterial (N2) des zweiten Elements angeordnet ist, das negative Elektrodenmaterial (N1) des ersten Elements gegenüber einem positiven Elektrodenmaterial angeordnet ist, und das positive Elektrodenmaterial (P2) des zweiten Elements gegenüber einem negativen Elektrodenmaterial angeordnet ist, wobei ein Isolator einen Elektrolyten aufweist, welcher zwischen den gegen- überliegenden Elektrodenmaterialpaaren angeordnet ist, so dass drei nebeneinanderliegende einheitliche Fächer (C1, C2, C3) gebildet werden.

7. Bipolare Batterie nach Anspruch 5 oder 6, in welcher eine elektrisch isolierende Dichtung (22) zwischen die gegenüberliegenden Elemente eingefügt wird, so dass eine Abdichtung der einheitlichen Fächer (C1, C2, C3) erzielt werden und ein elektrisch isolierender Film (24), welcher die freiliegenden Flächen der Träger bedeckt, wobei die isolierende Dichtung beispielsweise aus einem Elastomer, aus Latex oder aus einem thermoplastischen Elastomer besteht.

8. Bipolare Batterie nach dem vorhergehenden Anspruch, welche eine zusätzliche Filmdicke (26) an den elektronischen Verbindungen zwischen dem Träger eines gleichen Elements aufweist.

9. Bipolare Batterie nach dem vorhergehenden Anspruch, welche Mittel (20) aufweist, die zur Aufbringung einer Druckkraft auf jedes einheitliche Fach in der Lage sind, so dass positives Elektrodenmaterial, negatives Elektrodenmaterial und der Isolator eines jeden einheitlichen Fachs (C1, C2, C3) nebeneinander aufgebracht werden.

10. Bipolare Batterie nach einem der Ansprüche 7 bis 9, welche eine luftdichte Umhüllung aufweist, in welche die einheitlichen Fächer eingeführt werden, wobei das Vakuum in der Umhüllung derart gebildet wird, dass die Druckkräfte an die einheitlichen Fächer angelegt werden.

11. Bipolare Batterie nach Anspruch 6 oder 7, in welcher die Abdichtung der einheitlichen Fächer durch Einbringung einer Dichtung (122) erhalten wird, beispielsweise aus einem thermoplastischen Polymer, und der Druck eines jeden Fachs (C1, C2, C3) durch Kapselung in einem thermoplastischen Werkstoff, beispielsweise durch Injektion, erhalten wird.

12. Bipolare Batterie nach Anspruch 11, in welcher die Elemente Durchgangskanäle (16) vom Typ "Kontaktloch" an der Verbindung zwischen den Trägern aufweisen.

13. Bipolare Batterie nach einem der Ansprüche 5 bis 12, in welcher die einheitlichen Fächer einem geradlinigen Band folgend angeordnet sind.

14. Bipolare Batterie nach Anspruch 12, in welcher ein Teil des Bandes um eine leitfähige Achse (X1) gewickelt ist und ein anderer Teil des Bandes um eine andere leitfähige Achse (X2) gewickelt ist, wobei ein elektrisch leitender Film in die Wicklungen zwischengeschaltet wird, wobei die Spannung an den Polen der Batterie die Spannung zwischen den beiden leitfähigen Achsen ist.

15. Bipolare Batterie nach Anspruch 13, in welcher zwei benachbarte einheitliche Fächer zueinander gebogen sind, so dass sie gestapelt werden, wobei ein elektrisch isolierender Film zwischen den benachbarten einheitlichen Fächern angeordnet ist.

16. Bipolare Batterie nach einem der Ansprüche 5 bis 12, in welcher die benachbarten einheitlichen Fächer unterschiedlichen Richtungen folgend ausgerichtet sind, beispielsweise derart, dass ein dreidimensionales Gefüge gebildet wird.

17. Bipolare Batterie nach einem der Ansprüche 5 bis 12, welche zumindest zwei parallel geschaltete Anordnungen von in Reihe geschalteten einheitlichen Fächern aufweist.

## Claims

1. An element for a bipolar battery, intended for the production of two unit cells (C1, C2, C3, C4) comprising an electronic conductive support comprising a first electronic conductive support part, a second electronic conductive support part, an electronic conductive connection connecting the first and the second electronic conductive support parts, each electronic conductive support part comprising a first and second face distinct from the first and second faces of the other electronic conductive support part, said element also comprising a positive electrode material (P1, P2) deposited on one of the faces of the first electronic conductive support part and a negative electrode material (N1, N2) deposited on one of the faces of the other electronic conductive support part, **characterized in that** the first electronic conductive support part, the second electronic conductive support part and the connection are produced as a single piece from a plate, said plate having a thickness of between 20 µm and 250 µm allowing easy shaping, and providing a certain flexibility, enabling the unit cells to be oriented relative to one another with great freedom.

2. An element for a bipolar battery according to claim 1, in which the faces, on which the positive electrode material (P1, P2) and the negative electrode material (N1, N2) are positioned, are opposite relative to the general surface formed by the support (10, 110, 12, 112).

3. An element for a bipolar battery according to claim 1 or 2, in which the first electronic conductive support (10, 110) and the second electronic conductive support (12, 112) are positioned in two parallel planes.

4. An element for a bipolar battery according to claim 1 to 3, in which the first electronic conductive support (110, 112) and the second electronic conductive support (110, 112) are made from nickel, copper, aluminium or aluminium alloy or are formed by a sealed carbon fabric on which a metal film, for example nickel, copper or aluminium, is deposited on one of the faces of the fabric and the positive electrode material (P1, P2) is LiFeP04 blended with a polymer binder of type PVDF and the negative electrode material (N1, N2) is Li4Ti5O12 blended with a polymer binder of type PVDF.

5. A bipolar battery comprising at least one element according to one of the previous claims; the positive electrode material (P1) supported by the first electronic conductive support (10, 110) is positioned facing a negative electrode material, the negative electrode material (N2) supported by the second electronic conductive support (12) is positioned facing a positive electrode material, the facing electrode materials being separated by an insulator containing an electrolyte, thus forming two juxtaposed unit cells (C1, C2).

6. A bipolar battery according to claim 5, comprising at least a first element and a second element according to one of the claims 1 to 4, the positive electrode material (P1) of the first element being positioned facing a negative electrode material (N2) of the second element, the negative electrode material (N1) of the first element being positioned facing a positive electrode material, and the positive electrode material (P2) of the second element being positioned facing a negative electrode material, and an insulator containing an electrolyte being positioned between the pairs of facing electrode materials, so as to form three juxtaposed unit cells (C1, C2, C3).

7. A bipolar battery according to claim 5 or 6, in which an electrical insulated joint (22) is interposed between the facing elements so as to seal the unit cells (C1, C2, C3), and an electrically insulating film (24) covers the free faces of the supports; the insulated joint is made, for example, from elastomer, latex or thermoplastic rubber.

8. A bipolar battery according to the previous claim, comprising an additional film thickness (26) in the area of the electronic connections between the support of a given element.

9. A bipolar battery according to the previous claim, comprising means (20) able to apply a compression effort to each unit cell in order to apply, one against the other, the positive electrode materials, the negative electrode materials and the insulator of each unit cell (C1, C2, C3).

10. A bipolar battery according to one of the claims 7 to 9, comprising an tight jacket in which the unit cells are introduced, the jacket being pumped down to a vacuum, such that compression efforts are applied to the unit cells.

11. A bipolar battery according to claim 6 or 7, in which the sealing of the unit cells is obtained by injection of a joint (122), for example made of thermoplastic polymer, and the cells (C1, C2, C3) are compressed by coating with a thermoplastic material, for example by injection.

12. A bipolar battery according to claim 11, in which the elements have through channels (16), of the via hole type, in the area of the connection between the supports.

13. A bipolar battery according to one of the claims 5 to 12, in which the unit cells are positioned in a rectilinear strip.

14. A bipolar battery according to claim 12, in which a part of the strip is wound around a conductive spindle (X1) and another part of the strip is wound around another conductive spindle (X2), with an electrical insulating film being inserted in the windings, and with the voltage at the terminals of the battery being the voltage between the two conductive spindles.

15. A bipolar battery according to claim 13, in which two adjacent unit cells are folded back one towards the other so as to be stacked, with an electrically insulating film being positioned between the adjacent unit cells.

16. A bipolar battery according to one of the claims 5 to 12, in which adjacent unit cells are oriented in different directions, for example to form a structure in three dimensions.

17. A bipolar battery according to one of the claims 5 to 12, comprising, connected in parallel, at least two assemblies of unit cells connected in series.
